# EUROPÄISCHE PATENTANMELDUNG

(11) **EP 2 808 506 A1**
(43) Veröffentlichungstag der Anmeldung: **03.12.2014**
(21) Anmeldenummer: 14169119.6
(22) Anmeldetag: 20.05.2014
(51) Int. Cl.: F01M 1/10

(54) **Ölfilter/Ölmodul**

(30) Priorität: 28.05.2013 DE 102013209960
(71) Anmelder: Mahle International GmbH, 70376 Stuttgart (DE)
(72) Erfinder: DUNSCH, Robert, 71665 Vaihingen (DE)
(74) Vertreter: BRP Renaud & Partner mbB Rechtsanwälte Patentanwälte Steuerberater

(57) **Zusammenfassung**

Die Erfindung betrifft ein Ölfilter/Ölmodul (1) einer Brennkraftmaschine mit einem Rücklaufsperrventil (2). Erfindungswesentlich ist dabei, dass das Rücklaufsperrventil (2) als Rückschlag-Klappenventil (3), mit einer schwenkbar gelagerten und mittels einer Feder (4) in Schließrichtung vorgespannten Klappe (5) ausgebildet ist.

## Beschreibung

Die vorliegende Erfindung betrifft einen Ölfilter/Ölmodul einer Brennkraftmaschine mit einem Rücklaufsperrventil gemäß dem Oberbegriff des Anspruchs 1. Die Erfindung betrifft außerdem ein als Ölfilter ausgebildetes Filterelement sowie ein Rückschlag-Klappenventil für ein derartiges Ölfilter/Ölmodul oder Filterelement.

Rücklaufsperrventile sind vielfach bekannt und auch bereits seit Langem im Bereich von Schmierstoffkreisläufen, insbesondere in Brennkraftmaschinen in Kraftfahrzeugen, eingesetzt. Bekannte Rücklaufsperrventile weisen dabei jedoch einen vergleichsweise hohen Öffnungsdruck auf, das heißt es wird ein vergleichsweise hoher Schmiermittel- bzw. Öldruck zum Öffnen des jeweiligen Rücklaufsperrventils benötigt. Zugleich treten bei bekannten Rücklaufsperrventile in geöffnetem Zustand vergleichsweise hohe Turbulenzen auf, die ebenfalls den Druck erhöhen. Der vergleichsweise hohe Druck muss dabei von einer Ölpumpe bereitgestellt werden, die hierfür wiederum eine erhöhte Leistungsaufnahme benötigt. Insgesamt wird dadurch letztendlich auch die Energiebilanz der Brennkraftmaschine verschlechtert.

Die vorliegende Erfindung beschäftigt sich daher mit dem Problem, für ein Ölfilter/Ölmodul der gattungsgemäßen Art eine verbesserte Ausführungsform anzugeben, die insbesondere energieärmer betrieben werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, für ein Ölfilter/Ölmodul einer Brennkraftmaschine mit einem Rücklaufsperrventil, dieses Rücklaufsperrventil nun als Rückschlag-Klappenventil auszubilden und dadurch einen Öffnungsdruck zum Öffnen des Rücklaufsperrventils signifikant senken zu können. Das erfindungsgemäße Rückschlag-Klappenventil weist eine schwenkbar gelagerte und mittels einer Feder in Schließrichtung vorgespannte Klappe auf und ist konstruktiv äußerst einfach und zudem kostengünstig aufgebaut. Bisherige Rücklaufsperrventile besaßen beispielsweise einen kugelförmigen Ventilkörper, der mittels einer Feder gegen einen ringförmigen Ventilsitz vorgespannt war. Zum Öffnen eines derartigen Rücklaufsperrventils war jedoch ein vergleichsweise hoher Fluiddruck erforderlich, was bei dem erfindungsgemäß als RückschlagKlappenventil ausgebildeten Rücklaufsperrventil und nicht mehr erforderlich ist. Der zum Öffnen des Rückschlag-Klappenventils erforderliche Druck kann auf denkbar einfache Weise mittels der Feder vorgegeben werden. Zugleich treten bei dem erfindungsgemäßen Rückschlag-Klappenventil in geöffnetem Zustand keine oder nur marginale Turbulenzen in der Strömung auf, wodurch ein druckoptimiertes Durchströmen erreicht werden kann. Derartige RückschlagKlappenventile weisen darüber hinaus im Schließzustand eine hundertprozentige Dichtheit auf, was darüber hinaus beispielsweise durch eine spezielle Ausformung einer Dichtkontur, insbesondere einer Dichtlippe, erreicht werden kann. Im Vergleich zu bisherigen Rücklaufsperrventilen besitzt das erfindungsgemäße Rückschlag-Klappenventil auch einen deutlich reduzierten Strömungswiderstand im geöffneten Zustand, wodurch die erforderliche Leistung einer Schmiermittelbzw. Ölpumpe reduziert werden kann. Generell sind derartige RückschlagKlappenventile im Bereich von Gasen bereits bekannt, im Bereich von Ölfiltern bzw. Ölmodulen bisher jedoch in keiner Weise eingesetzt.

Bei einer vorteilhaften Weiterbildung der erfindungsgemäßen Lösung weist das Ölfilter/Ölmodul einen ersten Kanalabschnitt sowie einen zweiten Kanalabschnitt auf, wobei der erste Kanalabschnitt in den zweiten Kanalabschnitt hineinragt und sein in den zweiten Kanalabschnitt hineinragendes Ende mittels der Klappe verschließbar ist. Am freien Ende des ersten Kanalabschnitts ist somit ein Ventilsitz ausgebildet, der von der sich im Schließzustand darauf ablegenden Klappe verschlossen wird. Der Durchmesser des zweiten Kanalabschnitts ist größer, um insbesondere den ersten Kanalabschnitt einstecken zu können und zudem Platz zu schaffen zur schwenkbaren Lagerung der Klappe des erfindungsgemäßen Rückschlag-Klappenventils.

Zweckmäßig ist die Klappe über einen Scharnierbolzen schwenkbar am Ende des ersten Kanalabschnitts gelagert, wobei der Scharnierbolzen über eine Clipsverbindung mit am ersten Kanalabschnitt angebrachten Lagerböcken verbunden ist. Eine derartige Clipsverbindung zur schwenkbaren Anbindung der Klappe des Rückschlag-Klappenventils an den Lagerböcken vereinfacht nicht nur die Montage in erheblicher Weise, sondern trägt auch dazu bei, das gesamte RückschlagKlappenventil kostengünstig auszubilden. Selbstverständlich ist dabei auch denkbar, dass die Klappe des Rückschlag-Klappenventils auf andere, insbesondere konstruktiv einfache Weise am ersten Kanalabschnitt angebunden ist.

Bei einer weiteren vorteilhaften Ausführungsform der erfindungsgemäßen Lösung weist die Klappe eine Dichtkontur, insbesondere eine umlaufende Dichtlippe, auf. Eine derartige Dichtkontur sichert nicht nur einerseits ein dichtes Anlegen der Klappe am Ventilsitz und damit eine hundertprozentige Dichtheit, sondern unterstützt auch ein Schließen der Klappe. Die Dichtlippe kann einen Winkel 20 - 60 ° bezogen auf Ebene des Ventilsitzes aufweisen, insbesondere 45 ° und dichtet daher sowohl radial als auch axial. Damit kann sowohl axiales Toleranzspiel (Toleranzausgleich wegen z.B. der Verkippung der Klappe notwendig) ausgeglichen werden und ein zu großer Druckverlust, wie er bei einer rein radialen Dichtung vorliegt, vermieden werden. Die Dichtlippe kann dabei in einem 2K Verfahren einfach mit angespritzt werden oder im Nachhinein als separates Bauteil eingeknöpft bzw. verschweißt werden.

Bei einer weiteren vorteilhaften Ausführungsform der erfindungsgemäßen Lösung ist die Feder beispielsweise als Schenkelfeder ausgebildet. In dieser Weise kann die Schenkelfeder um den Scharnierbolzen gewunden sein und sich mit einem ersten Arm an der Klappe und mit einem zweiten Arm beispielsweise am ersten Kanalabschnitt oder an einem der Lagerböcke abstützen. Mittels einer derartigen Schenkelfeder oder generell mittels einer derartigen Feder lässt sich der Öffnungsdruck zum Öffnen der Klappe exakt vordefinieren, wobei zum Öffnen der Klappe beispielsweise ein sehr geringer Öffnungsdruck eingestellt werden kann, der mit zunehmendem Öffnungsgrad der Klappe aufgrund der Federsteifigkeit zunimmt. Eine derartige Schenkelfeder bzw. generell eine derartige Feder stellt ein kostengünstiges Massenprodukt dar, dass somit nicht nur kostengünstig, sondern zudem auch langlebig ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Schnittdarstellung durch ein erfindungsgemäßes Ölfilter/Ölmodul mit einem Rückschlag-Klappenventil,
- Fig. 2: eine weitere mögliche Ausführungsform des erfindungsgemäßen Rückschlag-Klappenventils,
- Fig. 3: eine Darstellung wie in Fig. 2, jedoch bei einer weiteren Ausführungsform,
- Fig. 4: eine Schnittdarstellung durch eine Klappe des RückschlagKlappenventils,
- Fig. 5: eine Ansicht auf eine Klappe,
- Fig. 6a,b: eine weitere Ausführungsform des Rückschlag-Klappenventils in montiertem Zustand,
- Fig. 7a,b: eine Darstellung wie in Fig. 6, jedoch in demontiertem Zustand,
- Fig. 8: eine Schnittdarstellung durch ein erfindungsgemäßes RückschlagKlappenventil gemäß den Fig. 6 und 7
- Fig. 9: ein Filterelement mit einem als Bypassventil ausgebildeten erfindungsgemäßen Rückschlag-Klappenventil,
- Fig. 10: eine Ansicht von unten auf das Filterelement gemäß der Fig. 9,
- Fig. 11: eine Schnittdarstellung durch das Filterelement,
- Fig. 12: eine Detaildarstellung aus Fig. 11 im Bereich des Bypassventils.

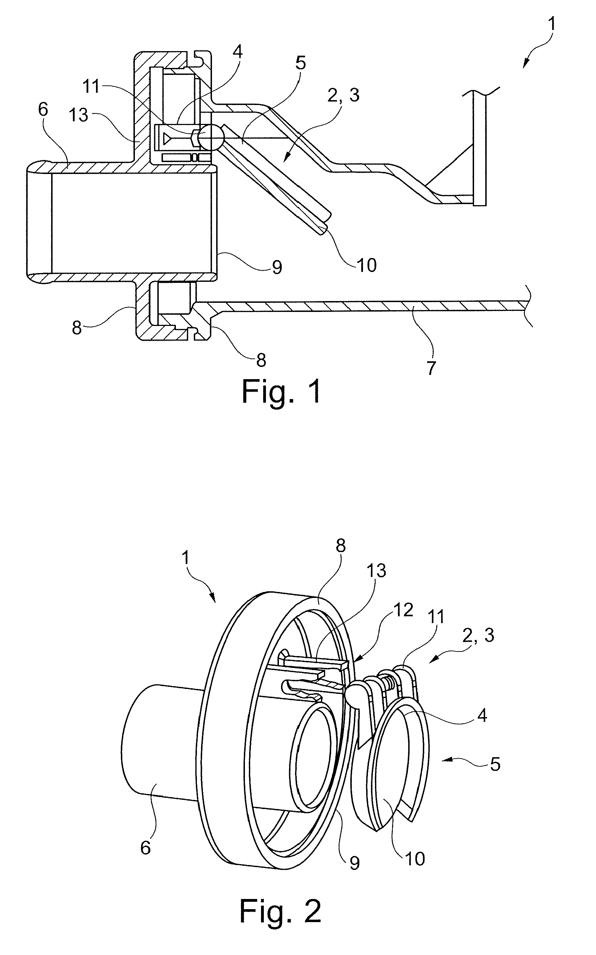

Entsprechend der Figur 1, weist ein erfindungsgemäßes Ölfilter/Ölmodul 1 einer im Übrigen nicht gezeigten Brennkraftmaschine ein Rücklaufsperrventil 2 auf, welches erfindungsgemäß als Rückschlag-Klappenventil 3 ausgebildet ist und eine schwenkbar gelagerte und mittels einer Feder 4 in Schließrichtung vorgespannte Klappe 5 aufweist. Das Ölfilter/Ölmodul 1 ist dabei lediglich im Bereich des Rückschlag-Klappenventils 3 gezeichnet, wobei es jedoch klar ist, dass bei einer Ausführung beispielsweise als Ölfilter ein entsprechendes Filterelement, etc., vorhanden sein kann.

Betrachtet man die Figur 1 weiter, so kann man erkennen, dass das Ölfilter/Ölmodul 1 einen ersten Kanalabschnitt 6 und einen zweiten Kanalabschnitt 7 aufweist, wobei der erste Kanalabschnitt 6 über einen Anschlussflansch 8 mit dem zweiten Kanalabschnitt 7 verbunden ist und zumindest teilweise in diesen hineinragt. Die Klappe 5 des erfindungsgemäßen Rückschlag-Klappenventils 3 verschließt dabei das in den zweiten Kanalabschnitt 7 hineinragende Ende des ersten Kanalabschnitts 6. Das freie Ende des ersten Kanalabschnitts 6 ist in diesem Fall als Ventilsitz 9 ausgebildet, auf welchen sich die Klappe 5 bei geschlossenem Rückschlag-Klappenventil 3 anlegt.

Mit dem erfindungsgemäß als Rückschlag-Klappenventil 3 ausgebildeten Rücklaufsperrventil kann insbesondere der zur Öffnung des Rücklaufsperrventils 2 erforderliche Fluiddruck, insbesondere Öldruck, deutlich reduziert werden, was den Einsatz leistungsschwächerer Ölpumpen ermöglicht und zudem die Energiebilanz einer mit einem derartigen Ölfilter/Ölmodul 1 ausgestatteten Brennkraftmaschine senkt. Zudem ist das erfindungsgemäße Rückschlag-Klappenventil 3 kostengünstig herzustellen und weist im geschlossenen Zustand eine einhundertprozentige Dichtheit auf. Diese einhundertprozentige Dichtheit wird nicht nur durch eine spezielle Ausformung einer Dichtkontur 10 (vergleiche Figur 1 sowie 3-5), sondern zudem auch durch die von der Feder 4 ausgeübte Kraft gewährleistet.

Die Klappe 5 des Rückschlag-Klappenventils 3 ist über einen Scharnierbolzen 11 am Ende des ersten Kanalabschnitts 6, insbesondere am Anschlussflansch 8 gelagert, wobei der Scharnierbolzen 11 beispielsweise über eine Clipsverbindung 12 mit am ersten Kanalabschnitt 6 angebrachten Lagerböcken 13 (vergleiche Figur 2) verbunden ist. Die Feder 4 ist vorzugsweise als kostengünstige Schenkelfeder ausgebildet. Durch die Lagerböcke 13 und die Clipsverbindung 12 lässt sich das erfindungsgemäße Rückschlag-Klappenventil 3 vergleichsweise einfach und kostengünstig montieren.

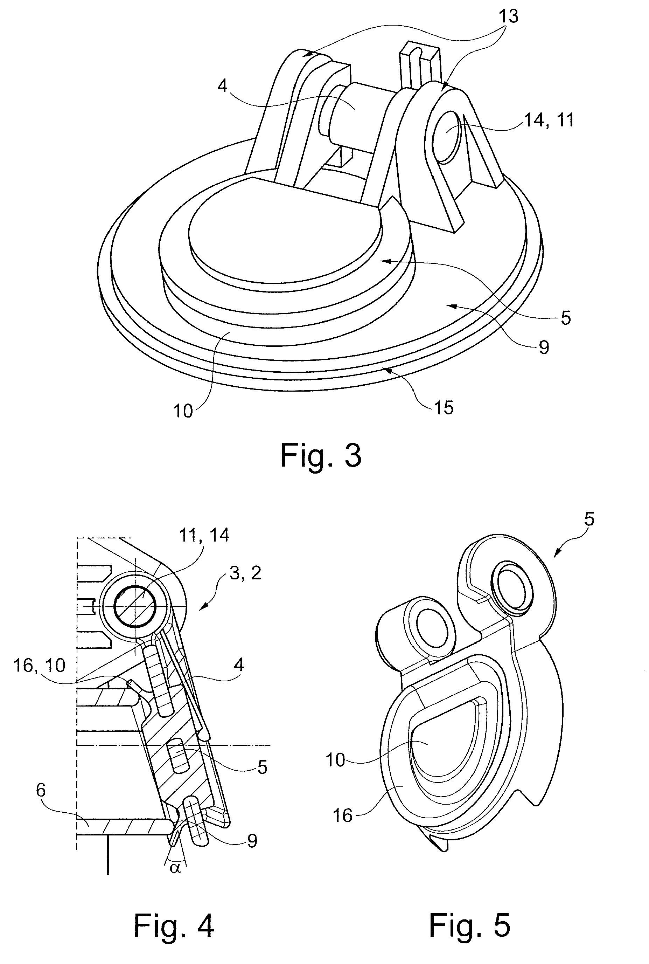

Betrachtet man die Figur 3, kann man eine alternative schwenkbare Lagerung der Klappe 5 erkennen, wobei in diesem Fall ein Zylinderstift 14 als Scharnierbolzen 11 fungiert. Bei dem gemäß der Figur 3 dargestellten Rückschlag-Klappenventil 3 ist dieses als komplette Baugruppe ausgebildet und weist demzufolge nicht nur die Feder 4, die Lagerböcke 13, die Klappe 5 mit Dichtkontur 10, sondern zusätzlich auch den Ventilsitz 9 auf. Über eine entsprechende Gestaltung eines Flansches 15 kann ein derart ausgebildetes Rückschlag-Klappenventil 3 als komplett vorgefertigte Baugruppe in eine Ölleitung eines Ölfilters/Ölmoduls 1 eingesetzt werden.

Betrachtet man die Figur 4, so kann man erkennen, dass die Dichtkontur 10 eine radial nach außen gerichtete Dichtlippe 16 aufweist, die ringförmig geschlossen ausgebildet ist und sich bei geschlossener Klappe 5 dichtend auf dem Ventilsitz 9 des ersten Kanalabschnitts 6 auflegt. Eine derartig ausgebildete Dichtkontur 10 ermöglicht insbesondere den Ausgleich von Fertigungstoleranzen im Bereich des Ventilsitzes 9 und ermöglicht so eine zuverlässige Abdichtung bei gleichzeitig vergleichsweise geringer Federkraft. Durch die entsprechende Ausbildung der Dichtlippe 16 wird die Schließfunktion zusätzlich von zurückströmendem Öl unterstützt. Die Dichtkontur 10 ist dabei als Einlegeteil ausgebildet und somit einfach in die Klappe 5 eingesetzt. Die Dichtlippe 16 kann einen Winkel 20 < α < 60 ° bezogen auf eine Ebene des Ventilsitzes 9 aufweisen, insbesondere α ca. 45 °, und dichtet daher sowohl radial als auch axial. Damit kann sowohl ein axiales Toleranzspiel (Toleranzausgleich wegen z.B. der Verkippung der Klappe 5 notwendig) ausgeglichen werden und ein zu großer Druckverlust, wie er bei einer rein radialen Dichtung vorliegt, vermieden werden. Die Dichtlippe 16 kann dabei in einem 2K Verfahren einfach mit angespritzt werden oder im Nachhinein als separates Bauteil eingeknöpft bzw. verschweißt werden.

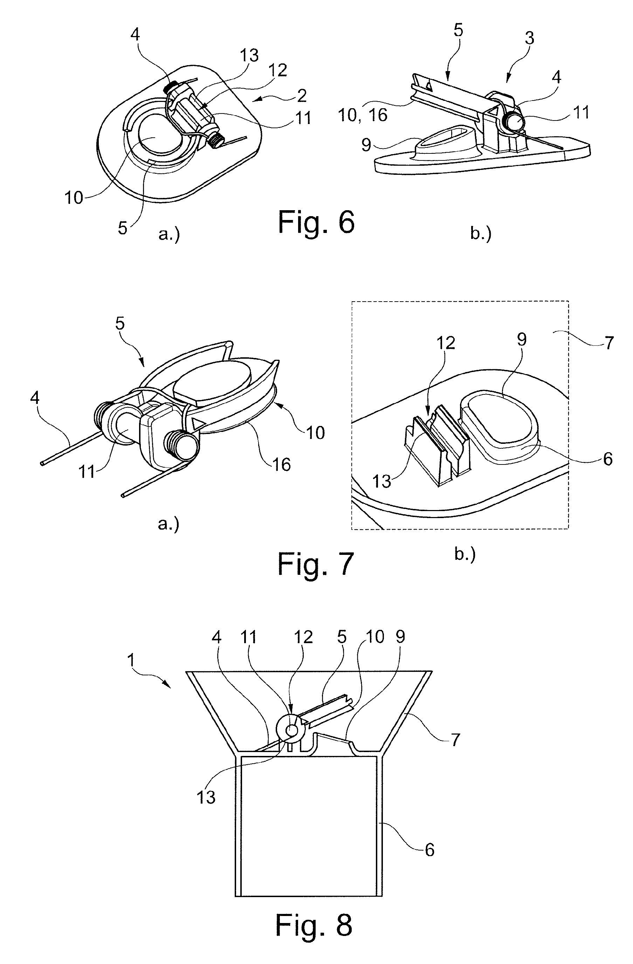

Eine weitere Ausführungsform des erfindungsgemäßen RückschlagKlappenventils 3 ist gemäß den Fig. 6 bis 8 dargestellt. Auch dieses weist eine schwenkbar gelagerte und mittels einer Feder 4 in Schließrichtung vorgespannte Klappe 5 auf. Betrachtet man insbesondere die Figur 8, so kann man erkennen, dass das Ölfilter/Ölmodul 1 einen ersten Kanalabschnitt 6 und einen zweiten Kanalabschnitt 7 aufweist, wobei der erste Kanalabschnitt 6 in diesem Fall einstückig mit dem zweiten Kanalabschnitt 7 verbunden ist. Der Ventilsitz 9 ist in diesem Fall ebenfalls einstückig mit dem Kanalabschnitt 6,7 ausgebildet.

Mit dem erfindungsgemäß als Rückschlag-Klappenventil 3 lassen sich insbesondere Turbulenzen bei geöffnetem Ventil zumindest reduzieren, wodurch der Strömungswiderstand reduziert werden kann, was wiederum den Einsatz leistungsschwächerer Ölpumpen ermöglicht und zudem die Energiebilanz einer mit einem derartigen Ölfilter/Ölmodul 1 ausgestatteten Brennkraftmaschine senkt. Zudem ist das erfindungsgemäße Rückschlag-Klappenventil 3 kostengünstig herzustellen und weist im geschlossenen Zustand eine einhundertprozentige Dichtheit auf.

Das gemäß den Fig. 6a,b und 7a dargestellte Rückschlag-Klappenventil 3 kann dabei separat vorgefertigt werden, beispielsweise zusammen mit dem Scharnierbolzen 11, wobei anschließend die Feder 4 eingehängt und dann die Klappe 5 samt Feder 4 über eine Clippsverbindung 12 mit den Lagerböcken 13 verclippst wird. Selbstverständlich kann der Scharnierbolzen 11 auch als separater Zylinderstift 14 ausgebildet sein und zusammen mit der Feder 4 an der Klappe 5 montiert werden. Die Feder 4 ist auch hier vorzugsweise als kostengünstige Schenkelfeder ausgebildet. Durch die Lagerböcke 13 und die Clippsverbindung 12 lässt sich das erfindungsgemäße Rückschlag-Klappenventil 3 vergleichsweise einfach und kostengünstig montieren.

Mit dem erfindungsgemäßen Rückschlag-Klappenventil 3 kann sich nicht nur ein vergleichsweise geringer und individuell einstellbarer Öffnungsdruck erreichen, sondern auch ein druckabhängiges Öffnen der Klappe 5, wobei zunehmender Öffnungswinkel der Klappe 5 einen zunehmenden Flüssigkeitsdruck erfordert. Auch kann der Strömungswiderstand im Bereich des Rückschlag-Klappenventils 3 Insgesamt gesenkt werden.

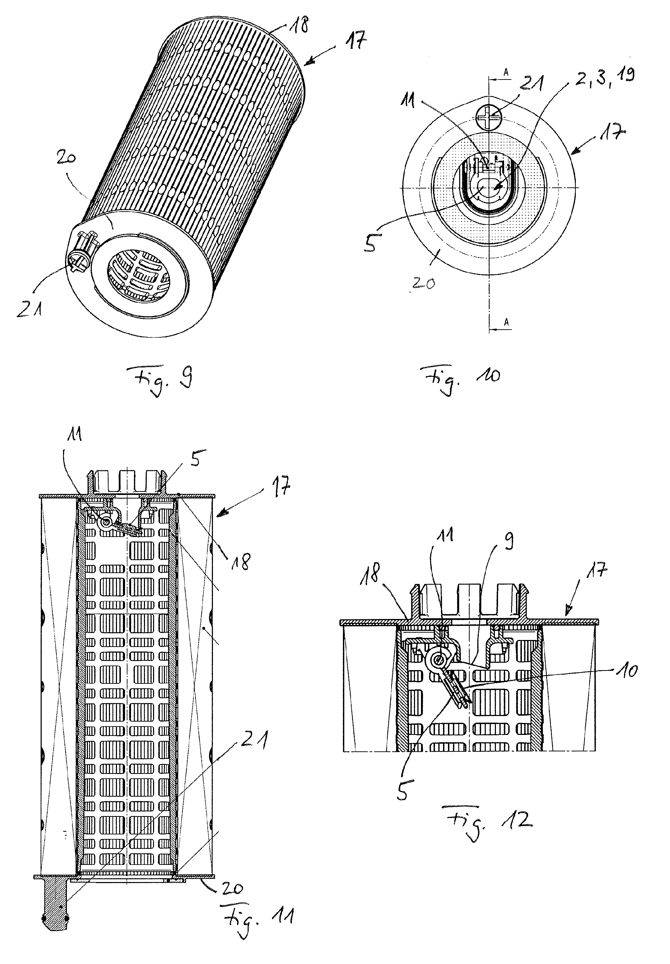

Die Fig. 9 bis 12 zeigt ein Filterelement 17 mit einem im Bereich einer oberen Endscheibe 18 vorgesehenen Bypassventil 19, welches dem erfindungsgemäßen Rückschlag-Klappenventil 3 entspricht. Durch die Integration des federunterstützten Rückschlag-Klappenventils 3 in das Filterelement 17 kann auf eine einfache Weise ein druckverlustoptimiertes Bypassventil 19 in ein Filterelement 17 integriert werden. Zudem besteht die Möglichkeit die Klappe 5 sowohl als Bypass- als auch als Rücklaufsperrventil 19,2 zu verbauen, wodurch die Produktionskosten gesenkt werden können. Durch ein derartiges Rückschlag-Klappenventil 3 wird zum einen der Druckabfall verringert, was insbesondere bei der Startphase des Motors für einen geringen CO₂ Ausstoß wichtig ist. Da der Aufbau der Klappe 5 sowohl für den Einsatz als Rücklaufsperrventil 2 als auch als Bypassventil 19 gleich ist, kann das gleiche Bauteil für beide Einsatzzwecke verwendet werden, woduch die Teilevielfalt und damit die Lager- und Logistikkosten reduziert werden können.

Die Bezugszeichen in den Fig. 9 bis 12 entsprechen dabei denjenigen in den Fig. 1 bis 8. Im Übrigen ikann das Filterelement 17 als bekanntes Ringfilterelement aufgebaut sein und an seiner unteren Endscheibe 20 einen in Axialrichtung abstehenden Pin 21 aufweisen, der im Einbauzustand beispielsweise einen Leerlaufkanal verschließt.

## Patentansprüche

1. Ölfilter/Ölmodul (1) einer Brennkraftmaschine mit einem Rücklaufsperrventil (2),
**dadurch gekennzeichnet, dass**
das Rücklaufsperrventil (2) als Rückschlag-Klappenventil (3), mit einer schwenkbar gelagerten und mittels einer Feder (4) in Schließrichtung vorgespannten Klappe (5) ausgebildet ist.

2. Ölfilter/Ölmodul nach Anspruch 1,
**dadurch gekennzeichnet, dass**
das Ölfilter/Ölmodul (1) einen ersten Kanalabschnitt (6) und einen zweiten Kanalabschnitt (7) aufweist, wobei der erste Kanalabschnitt (6) in den zweiten Kanalabschnitt (7) hineinragt und sein in den zweiten Kanalabschnitt (7) hineinragendes Ende mittels der Klappe (5) verschließbar ist.

3. Ölfilter/Ölmodul nach Anspruch 2,
**dadurch gekennzeichnet, dass**
die Klappe (5) über einen Scharnierbolzen (11) schwenkbar am Ende des ersten Kanalabschnitts (6) gelagert ist.

4. Ölfilter/Ölmodul nach Anspruch 3,
**dadurch gekennzeichnet, dass**
der Scharnierbolzen (11) über eine Clippsverbindung (12) mit am ersten Kanalabschnitt (6) angebrachten Lagerböcken (13) verbunden ist.

5. Ölfilter/Ölmodul nach einem der Ansprüche 1 bis 4,
**dadurch gekennzeichnet, dass**
die Feder (4) als Schenkelfeder ausgebildet ist.

6. Ölfilter/Ölmodul nach einem der Ansprüche 2 bis 5,
**dadurch gekennzeichnet, dass**
ein freies Ende des ersten Kanalabschnitts (6) einen Ventilsitz (9) aufweist.

7. Ölfilter/Ölmodul nach einem der Ansprüche 1 bis 6,
**dadurch gekennzeichnet, dass**
die Klappe (5) eine Dichtkontur (10), insbesondere eine umlaufende Dichtlippe (16), aufweist.

8. Ölfilter/Ölmodul nach Anspruch 7,
**dadurch gekennzeichnet, dass**
die Dichtlippe (16) einen Winkel 20 < α < 60 ° bezogen auf eine Ebene des Ventilsitzes (9) aufweist, insbesondere α ca. 45 °.

9. Als Ölfilter ausgebildetes Filterelement (17) mit einer oberen Endscheibe (18) und einer unteren Endscheibe (20), wobei im Bereich der oberen Endscheibe (18) ein als Bypassventil (19) ausgebildetes Rückschlag-Klappenventil (3) mit einer schwenkbar gelagerten und mittels einer Feder (4) in Schließrichtung vorgespannten Klappe (5) angeordnet ist.

10. Rückschlag-Klappenventil (3) eines Ölfilters/Ölmoduls (1) nach einem der Ansprüche 1 bis 8 oder ein Bypassventil (19) eines Filterelements (17) nach Anspruch 9, mit einer schwenkbar gelagerten und mittels einer Feder (4) in Schließrichtung vorgespannten Klappe (5) und mit einem Ventilsitz (9), der bei geschlossener Klappe (5) dichtend mit dieser zusammenwirkt.
